# EUROPEAN PATENT SPECIFICATION

(11) **EP 3 293 040 B1**
(45) Date of publication and mention of the grant of the patent: **17.06.2020**
(21) Application number: 16187870.7
(22) Date of filing: 08.09.2016
(51) Int. Cl.: B60N 2/01, B60N 2/015, B60N 2/24, B61D 33/00, B60N 2/882, B61D 1/04

(54) **METHOD OF CHANGING A SEAT CONFIGURATION OF A VEHICLE BODY OF A RAIL VEHICLE AND ASSOCIATED MODULAR ARRANGEMENT**
VERFAHREN ZUM ÄNDERN EINER SITZKONFIGURATION EINES WAGENKASTENS EINES SCHIENENFAHRZEUGS UND ENTSPRECHENDE MODULARE ANORDNUNG
PROCÉDÉ DE CHANGEMENT D'UNE CONFIGURATION DE SIÈGE D'UN CORPS D'UN VÉHICULE FERROVIAIRE ET AGENCEMENT MODULAIRE ASSOCIÉ

(43) Date of publication of application: 14.03.2018
(73) Proprietor: Bombardier Transportation GmbH, 10785 Berlin (DE)
(72) Inventor: Davidson, Brett, Brisbane, Queensland (AU); Griggs, Paul, Ambergate, Derbyshire DE56 2JL (GB)
(74) Representative: Alatis

(56) References cited:
- US-A1- 2011 140 499
- US-B1- 9 308 998

## Description

### TECHNICAL FIELD OF THE INVENTION

The present invention relates to changing a seat configuration of a vehicle body of a rail vehicle.

### BACKGROUND ART

Rail vehicles with seats facing a longitudinal direction are well known in the art, as well as vehicles with seats facing a transverse direction.

A modular arrangement known from US2011140499A1 comprises a vehicle body of a rail vehicle, at least one set of seats having seat cushions and backrests and assembling means for assembling the set of seats to the vehicle body so that the seats face a longitudinal direction of the vehicle body and for assembling the set of seats to the vehicle body so that the seats face a transverse direction of the vehicle body. Each seat can be provided with a set of optional headrests, which protrude upwardly from the backrest and above the window sills. However, the seats mounted with their headrests in the transverse direction, along the side windows of the vehicle body may both create a dirt trap on the window sill and impair the view through the window.

However, there is a need for means to transform a longitudinal seat layout into a transverse seat layout and conversely.

### SUMMARY OF THE INVENTION

The invention aims to provide means to transform a longitudinal seat layout into a transverse seat layout and conversely.

According to the invention, there is provided a method of changing a seat configuration of a vehicle body of a rail vehicle, the vehicle body being provided with at least one set of seats having seat cushions and backrests facing a first direction, the first direction being parallel or perpendicular to a longitudinal horizontal axis of the vehicle body, which comprises:
- disassembling the seats from a vehicle body;
- reassembling the seats to the vehicle body to face a second direction perpendicular to the first direction; and
- mounting headrests to or dismounting headrests from the seats, such that the seats facing the longitudinal direction are provided with the headrests and the seats facing the transverse direction are without the headrests.

Thanks to the proposed method, the seats can be easily adapted to a longitudinal or a transverse seat configuration, while taking into account the specific desired overall height in each configuration. The same seats are used throughout a train regardless of their orientation, and "add-on" headrests are used to change the seat height so that it meets the desired crashworthiness requirements, comfort level or aesthetic styling.

The public transport operator may for instance change the vehicle layout in the depot on Friday night, by turning the seats through 90° and taking off the head rest and mounting them in a traditional all longitudinal seating layout to increase the vehicle capacity ahead of an important public event during the weekend. After the event, the seats are moved again to the standard configuration. The number of spare parts to be maintained at a depot is limited.

According to a preferred embodiment, the vehicle body is provided with window sills located in or above a horizontal reference plane of the vehicle body, and the backrests of the seats facing the transverse direction are located below the horizontal reference plane. This ensures that the seats do not create a dirt trap on the window sill. Moreover, the view through the window is not impaired by the seats.

According to a preferred embodiment, the seats facing the longitudinal direction are arranged in rows such that the backrests of the seats of a first row are below a head impact point of a standard dummy sitting in a seat of a second row directly behind the first row. A backrest without headrest is lower than a backrest with integrated headrest, and therefore inherently stiffer. It is therefore important that the head impact point for a passenger sitting on a rear seat behind a front seat be located in the region of the headrest of the front seat. The stiffness of the headrest can be adapted to limit head injury criteria as set by the relevant structural integrity and crashworthiness standards applicable to the vehicle's operation. A typical standard dummy for this test would be a Hybrid III 50 percentile male ATD (Anthropometric Test Device).

Preferably, a distance between a lower edge to an upper edge of the headrests is greater than two third of a distance between the seat cushion and an upper edge of the backrests, and preferably greater than the distance between the seat cushion and an upper edge of the backrests.

According to one embodiment, the vehicle body is provided with support brackets fixed to the vehicle body for supporting the seats facing the first direction, and wherein disassembling the seats from the vehicle body includes disassembling the seats from the support brackets fixed to the vehicle body, and reassembling the seats to the vehicle body to face a second direction includes reassembling the seats to the support brackets fixed to the vehicle body. The number of spare parts is further reduced. Alternatively, the vehicle body can be provided with first support brackets fixed to the vehicle body for supporting the seats facing the first direction, and second support brackets fixed to the vehicle body for supporting the seats facing the second direction.

According to one embodiment, the seat cushions of the seats facing the longitudinal direction are higher than the seat cushions of the seats facing the transverse direction.

Also described is a modular arrangement comprising a vehicle body of a rail vehicle, at least one set of seats having seat cushions and backrests, a set of headrests, means for reversibly mounting the headrests to the seats, and assembling means for assembling the set of seats to the vehicle body so that the seats face a longitudinal direction of the vehicle body and for assembling the set of seats to the vehicle body so that the seats face a transverse direction of the vehicle body.

Preferably, the vehicle body is provided with window sills located in or above a horizontal reference plane of the vehicle body, and the assembling means are such that the backrests of the seats facing the transverse direction are located below the horizontal reference plane.

According to a preferred embodiment, the assembling means are such that the seats facing the longitudinal direction are arranged in rows and the backrests of the seats of a first row are below a head impact point of the seats of a second row directly behind the first row.

Advantageously, a distance between a lower edge to an upper edge of the headrests is greater than two third of a distance between the seat cushions and an upper edge of the backrests, and preferably greater than the distance between the seat cushions and an upper edge of the backrests.

According to one embodiment, the assembling means include support brackets fixed to the vehicle body for supporting both the seats facing the first direction, and the seats facing the second direction. The number of spare parts is further reduced. Alternatively, the assembling means include first support brackets for supporting the seats facing the first direction, and second support brackets for supporting the seats facing the second direction.

According to an embodiment, the assembling means are such that the seat cushions of the seats facing the longitudinal direction are higher than the seat cushions of the seats facing the transverse direction.

### BRIEF DESCRIPTION OF THE FIGURES

Other advantages and features of the invention will then become more clearly apparent from the following description of a specific embodiment of the invention given as non-restrictive examples only and represented in the accompanying drawings in which:
- Figure 1 is a diagrammatic illustration of a rail vehicle with a transversal seat layout;
- Figure 2 is a diagrammatic illustration of the rail vehicle of figure 1 with a longitudinal seat layout;
- Figure 3 is a diagrammatic illustration of the rail vehicle of figure 1 with a mixed seat layout;
- Figure 4A illustrates the basic seats used for the layouts illustrated in figures 1 to 3;
- Figure 4B is an exploded view of the basic seats of figure 4A with additional components used for a longitudinal layout of the seats in the rail vehicle;
- Figure 4C illustrates the longitudinal seats;
- Figure 4D is an exploded view of the basic seats of figure 4A with additional components used for a transverse layout of the seats in the rail vehicle;

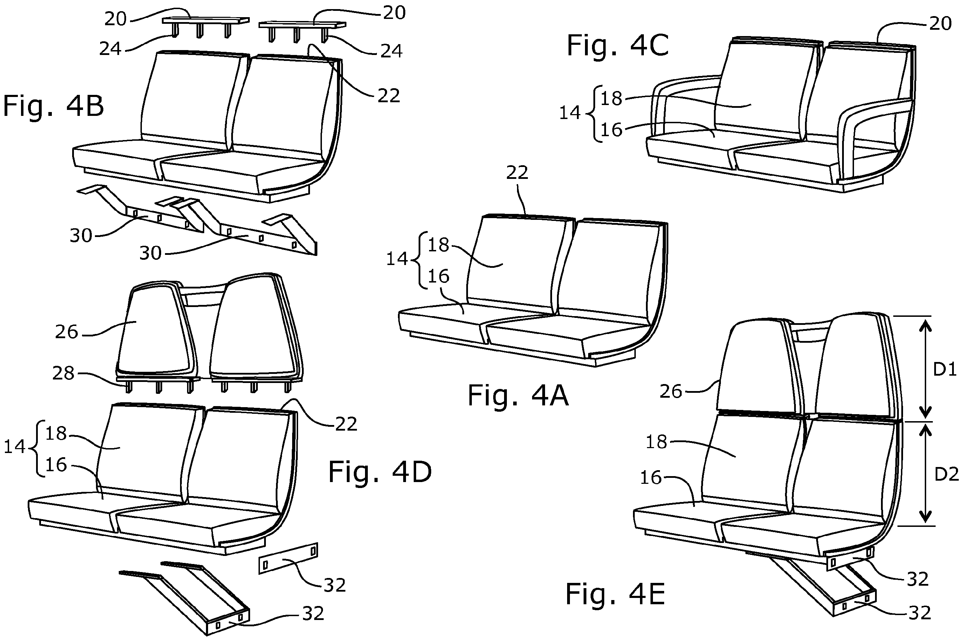

- Figure 4D illustrates the transverse seats;

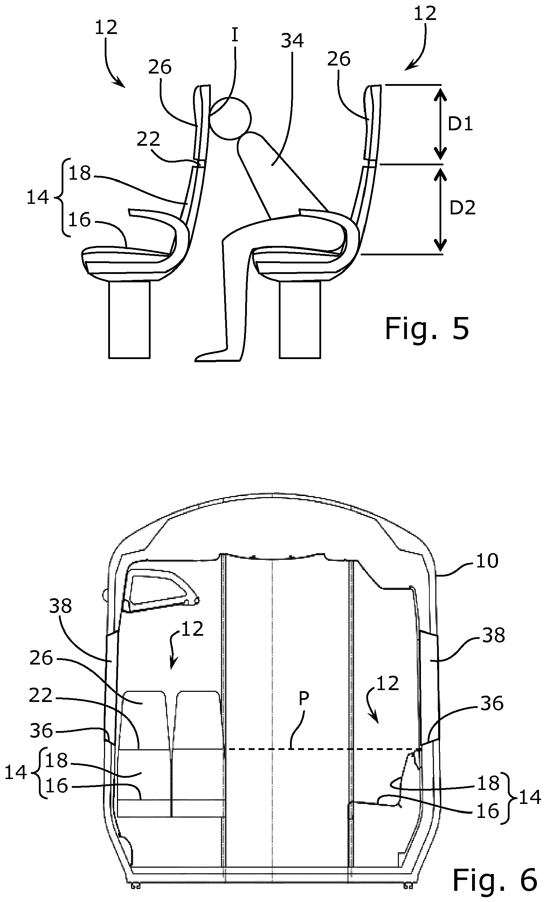

- Figure 5 illustrates a side view of two adjacent rows of seats in the transverse layout;

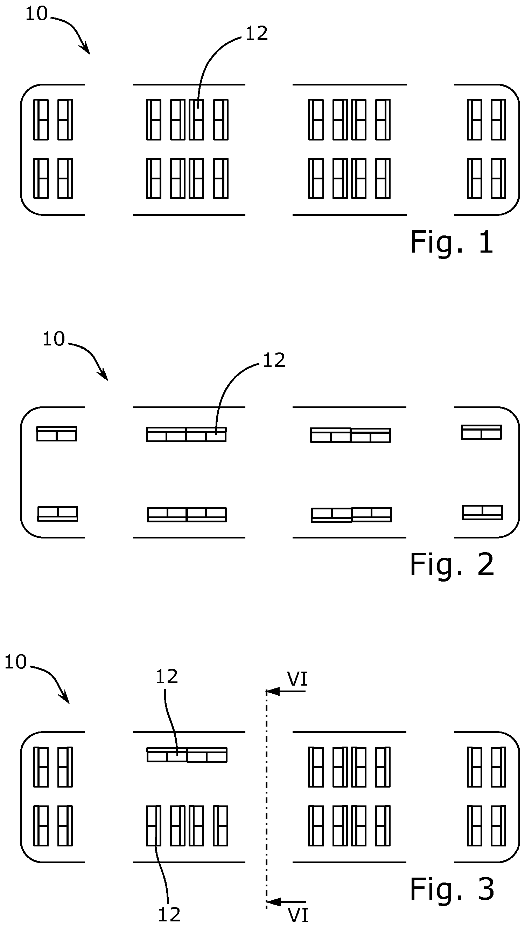

- Figure 6 is a cross-section of the rail vehicle body through line VI-VI of figure 3.

Corresponding reference numerals refer to the same or corresponding parts in each of the figures.

### DETAILED DESCRIPTION OF PREFERRED EMBODIMENTS

A vehicle body **10** of a rail vehicle with seats **12** facing one end of the vehicle body, is illustrated in figure **1****.** The same vehicle is illustrated in figure **2** with the seats **12** facing a transverse direction of the vehicle, and with a mixed layout is illustrated in figure **3****.**

The seats **12** used in the three configurations have a common integral base **14,** illustrated in figure **4A****,** comprising a seat cushion **16** and a backrest **18.** When used in the longitudinal layout of figure **2****,** a covering strip **20** is added at the upper edge **22** of the backrest **18** as illustrated in figures **4B** and **4C****.** The covering strip **20** is provided with stems **24** that are inserted in corresponding tubular cavities formed in the backrest and opened at the upper edge **22.** In the transverse configuration of figure **1****,** on the other hand, the covering strip **20** is removed and a headrest **26** with stems **28** is fixed to the backrest **18,** as illustrated in figures **4D** and **4E****.** In each configuration, specific support brackets **30, 32** are used to fix the seat to the floor structure and/or a side wall structure of the vehicle body. As illustrated in the figures, the distance **D1** between a lower edge and an upper edge of the headrest **26** is greater than two third of a distance **D2** between the seat cushion **14** and the upper edge **22** of the backrest **18,** and preferably greater than the distance between the lower edge and the upper edge of the backrest.

As illustrated in figure **5****,** the seats **12** facing the longitudinal direction are arranged in rows such that the backrests **18** of the seats of a first row are below a head impact point I of a standard dummy **34** sitting in a seat of a second row directly behind the first row. The low upper edge **22** of the backrest **18** makes it possible to obtain this result whilst maintaining a standard distance between the two adjacent rows of seats **12.** The stiffness of the headrests **26** can be adapted to absorb the impact energy and minimise the risk of injury to meet predetermined crashworthiness requirements.

As illustrated in figure **6****,** the upper edge **22** of the seat backrest **18** in the longitudinal direction is located below a horizontal plane P defined by the window sills **36** of the vehicle body **10.** Hence, no dust trap is formed between the seat backrest **18** and the window sill **36.** The seat backrest **18** does not impair the view through the window **38.**

If necessary, the support brackets **30, 32** used in the transverse and longitudinal configurations are such that the seat cushions **14** of the seats **12** facing the longitudinal direction (figure **1**) are higher than the seat cushions **14** of the seats **12** facing the transverse direction (figure **2**).

According to an alternative embodiment, the same support brackets are used to fix the seats **12** to the vehicle body structure, preferably to the side walls of the vehicle body structure, regardless of orientation.

## Claims

1. A method of changing a seat configuration of a vehicle body (10) of a rail vehicle, the vehicle body (10) being provided with at least one set of seats (12) having seat cushions (16) and backrests (16) facing a first direction, the first direction being parallel or perpendicular to a longitudinal horizontal axis of the vehicle body (10), the method comprising:
- disassembling the seats (12) from the vehicle body (10);
- reassembling the seats (12) to the vehicle body to face a second direction perpendicular to the first direction; and
**characterised in that** the method further comprises
- mounting headrests (26) to or dismounting headrests (26) from the seats (12), such that the seats (12) facing the longitudinal direction are provided with the headrests (26) and the seats (12) facing the transverse direction are without the headrests.

2. The method of changing a seat configuration of claim 1, wherein the vehicle body (10) is provided with window sills (36) located in or above a horizontal reference plane (P) of the vehicle body (10), and the backrests (16) of the seats (12) facing the transverse direction are located below the horizontal reference plane (P).

3. The method of changing a seat configuration of claim 1, wherein the seats (12) facing the longitudinal direction are arranged in rows such that the backrests (18) of the seats (12) of a first row are below a head impact point (I) of a standard dummy (34) sitting in a seat (12) of a second row directly behind the first row.

4. The method of changing a seat configuration of any one of the preceding claims, wherein a distance (D1) between a lower edge and an upper edge of the headrests (26) is greater than two third of a distance (D2) between the seat cushion (16) and an upper edge (22) of the backrests (18), and preferably greater than the distance (D2) between the seat cushion (16) and an upper edge (22) of the backrests (18).

5. The method of changing a seat configuration of any one of claims 1 to 4, wherein the vehicle body (10) is provided with support brackets (30) fixed to the vehicle body (10) for supporting the seats (12) facing the first direction, and wherein disassembling the seats (12) from the vehicle body (10) includes disassembling the seats (12) from the support brackets (30) fixed to the vehicle body (10), and reassembling the seats (12) to the vehicle body (10) to face a second direction includes reassembling the seats (12) to the support brackets (30) fixed to the vehicle body (10).

6. The method of changing a seat configuration of any one of claims 1 to 4, wherein the vehicle body is provided with first support brackets (30) fixed to the vehicle body (10) for supporting the seats (12) facing the first direction, and second support brackets (32) fixed to the vehicle body (10) for supporting the seats (12) facing the second direction.

7. The method of changing a seat configuration of any one of the preceding claims, wherein the seat cushions (16) of the seats (12) facing the longitudinal direction are higher than the seat cushions (16) of the seats (12) facing the transverse direction.

## Patentansprüche

1. Verfahren zum Ändern einer Sitzkonfiguration eines Fahrzeugkörpers (10) eines Schienenfahrzeugs, wobei das Schienenfahrzeug (10) mit wenigstens einem Satz Sitze (12) mit Sitzpolstern (16) und Rückenlehnen (16) gegenüber einer ersten Richtung bereitgestellt ist, wobei die erste Richtung parallel oder lotrecht zu einer horizontalen Längsachse des Fahrzeugkörpers (10) ist, wobei das Verfahren umfasst:
- Ausbauen der Sitze (12) aus einem Fahrzeugkörper (10) ;
- erneutes Zusammenbauen der Sitze (12) in dem Fahrzeugkörper gegenüber einer zweiten Richtung lotrecht zu der ersten Richtung; und
**dadurch gekennzeichnet, dass** das Verfahren weiterhin umfasst:
- das Montieren von Kopfstützen (26) an oder das Abmontieren von Kopfstützen (26) von den Sitzen (12) derart, dass die Sitze (12) gegenüber der Längsrichtung mit den Kopfstützen (26) bereitgestellt sind und die Sitze (12) gegenüber der Querrichtung ohne Kopfstützen sind.

2. Verfahren zum Ändern einer Sitzkonfiguration gemäß Anspruch 1, wobei der Fahrzeugkörper (10) mit Fensterbänken (36) bereitgestellt ist, die in oder über einer horizontalen Referenzebene (P) des Fahrzeugkörpers (10) angeordnet ist und die Rückenlehnen (16) der Sitze (12) gegenüber der Querrichtung unterhalb der horizontalen Referenzebene (P) angeordnet sind.

3. Verfahren zum Ändern einer Sitzkonfiguration gemäß Anspruch 1, wobei die Sitze (12) gegenüber der Längsrichtung in Reihen derart angeordnet sind, dass die Rückenlehnen (18) der Sitze (12) einer ersten Reihe unterhalb eines Kopf-Auftreffpunktes (I) eines Standard-Dummys (34) angeordnet sind, der auf einem Sitz (12) einer zweiten Reihe direkt hinter der ersten Reihe sitzt.

4. Verfahren zum Ändern einer Sitzkonfiguration gemäß irgendeinem der voranstehenden Ansprüche, wobei eine Entfernung (D1) zwischen einer niedrigeren Kante und einer oberen Kante der Kopfstützen (26) größer ist als zwei Drittel einer Entfernung (D2) zwischen dem Sitzkissen (16) und einer oberen Kante (22) der Rückenlehnen (18) und bevorzugt größer als die Entfernung (D2) zwischen dem Sitzkissen (16) und der oberen Kante (22) der Rückenlehnen (18).

5. Verfahren zum Ändern einer Sitzkonfiguration gemäß irgendeinem der Ansprüche 1 bis 4, wobei der Fahrzeugkörper (10) mit Stützhalterungen (30) bereitgestellt ist, die an dem Fahrzeugkörper (10) zum Stützen der Sitze (12) gegenüber der ersten Richtung bereitgestellt ist und wobei das Ausbauen der Sitze (12) aus dem Fahrzeugkörper (10) das Ausbauen der Sitze (12) aus den Stützhalterungen (30) enthält, die an dem Fahrzeugkörper (10) befestigt sind, und das erneute Zusammenbauen der Sitze (12) an dem Fahrzeugkörper (10) gegenüber der zweiten Richtung das erneute Zusammenbauen der Sitze (12) an den Stützhalterungen (30) enthält, die an dem Fahrzeugkörper (10) befestigt sind.

6. Verfahren zum Ändern einer Sitzkonfiguration gemäß irgendeinem der Ansprüche 1 bis 4, wobei der Fahrzeugkörper mit ersten Stützhalterungen (30) bereitgestellt ist, die an dem Fahrzeugkörper (10) zum Stützen der Sitze (12) gegenüber der ersten Richtung befestigt sind, und zweite Stützhalterungen (32), die an dem Fahrzeugkörper (10) zum Stützen der Sitze (12) gegenüber der zweiten Richtung befestigt sind.

7. Verfahren zum Ändern einer Sitzkonfiguration gemäß irgendeinem der voranstehenden Ansprüche, wobei die Sitzkissen (16) der Sitze (12) gegenüber der Längsrichtung höher sind als die Sitzkissen (16) der Sitze (12) gegenüber der Querrichtung.

## Revendications

1. Procédé de modification de la configuration d'un siège d'une carrosserie de véhicule (10) d'un véhicule de chemin de fer,
la carrosserie du véhicule (10) étant pourvue d'au moins un ensemble de sièges (12) munis de coussins de siège (16) et de dossiers (16) orientés dans une première direction, la première direction étant parallèle ou perpendiculaire à un axe horizontal longitudinal de la carrosserie de véhicule (10), le procédé comprenant :
- le démontage des sièges (12) de la carrosserie de véhicule (10) ;
- le remontage des sièges (12) sur la carrosserie de véhicule pour les orienter dans une deuxième direction perpendiculaire à la première direction ; et
**caractérisé en ce que** le procédé comprend en outre
- le montage d'appuis-tête (26) sur, ou le démontage d'appuis-tête (26) des sièges (12), de telle sorte que les sièges (12) orientés dans la direction longitudinale soient équipés d'appuis-tête (26) et que les sièges (12) orientés dans la direction transversale soient dépourvus d'appuis-tête.

2. Procédé de modification de la configuration d'un siège selon la revendication 1, dans lequel la carrosserie de véhicule (10) est équipée de rebords de fenêtre (36) situés dans ou au-dessus d'un plan de référence horizontal (P) de la carrosserie de véhicule (10), et les dossiers (16) des sièges (12) orientés dans la direction transversale sont situés en dessous du plan de référence horizontal (P).

3. Procédé de modification de la configuration d'un siège selon la revendication 1, dans lequel les sièges (12) orientés dans la direction longitudinale sont disposés en rangées de telle sorte que les dossiers (18) des sièges (12) d'une première rangée se trouvent en dessous d'un point d'impact de la tête (I) d'un mannequin standard (34) assis sur un siège (12) d'une deuxième rangée directement derrière la première rangée.

4. Procédé de modification de la configuration d'un siège selon l'une quelconque des revendications précédentes, dans lequel une distance (D1) entre un bord inférieur et un bord supérieur des appuis-tête (26) est supérieure à deux tiers d'une distance (D2) entre le coussin de siège (16) et un bord supérieur (22) des dossiers (18), et de préférence supérieure à la distance (D2) entre le coussin de siège (16) et un bord supérieur (22) des dossiers (18).

5. Procédé de modification de la configuration d'un siège selon l'une quelconque des revendications 1 à 4, dans lequel la carrosserie de véhicule (10) est équipée de consoles de support (30) fixées à la carrosserie de véhicule (10) pour supporter les sièges (12) orientés dans la première direction, et dans lequel le démontage des sièges (12) de la carrosserie de véhicule (10) comprend le démontage des sièges (12) de consoles de support (30) fixées à la carrosserie de véhicule (10), et le remontage des sièges (12) à la carrosserie de véhicule (10) pour qu'ils orientés dans une deuxième direction comprend le remontage des sièges (12) sur les consoles de support (30) fixées à la carrosserie de véhicule (10).

6. Procédé de modification de la configuration d'un siège selon l'une quelconque des revendications 1 à 4, dans lequel la carrosserie de véhicule est équipée de premières consoles de support (30) fixées à la carrosserie de véhicule (10) pour supporter les sièges (12) orientés dans la première direction, et de secondes consoles de support (32) fixées à la carrosserie de véhicule (10) pour supporter les sièges (12) orientés dans la seconde direction.

7. Procédé de modification de la configuration d'un siège selon l'une quelconque des revendications précédentes, dans laquelle les coussins (16) des sièges (12) orientés dans la direction longitudinale sont plus hauts que les coussins (16) des sièges (12) orientés dans la direction transversale.
